# EUROPEAN PATENT APPLICATION

(11) **EP 4 822 837 A1**
(43) Date of publication of application: **14.10.2026**
(21) Application number: 25849543.1
(22) Date of filing: 04.12.2025
(51) Int. Cl.: H01M 50/103, H01M 50/209

(54) **BATTERY APPARATUS AND ELECTRIC DEVICE**

(30) Priority: 21.02.2025 CN 202520284666 U
(71) Applicant: Contemporary Amperex Technology Co., Limited, Ningde, Fujian 352100 (CN)
(72) Inventor: The designation of the inventor has not yet been filed
(74) Representative: Ran, Handong
(86) International application number: PCT/CN2025/140111
(87) International publication number: WO 2026/174897

(57) **Abstract**

A battery apparatus (100) and a power consuming device are provided. The battery apparatus (100) includes a battery cell (10), a flexible printed circuit (30), and a sleeve (40). The flexible printed circuit (30) is electrically connected to the battery cell (10). The flexible printed circuit (30) includes a body (31) and a stretch and contraction portion (32) connected to the body (31). The stretch and contraction portion (32) is deformable by stretching and contracting in a length direction of the body (31). The stretch and contraction portion (32) protrudes from the body (31) in a thickness direction of the body (31). The sleeve (40) is disposed outside the stretch and contraction portion (32) in a sleeving manner.

## Description

### CROSS-REFERENCE TO RELATED APPLICATIONS

The present application claims priority to and the benefit of Patent Application No. 202520284666.8 filed on February 21, 2025 with the China National Intellectual Property Administration, which is incorporated herein by reference in its entirety.

### TECHNICAL FIELD

The present application relates to the field of battery technologies, and in particular, to a battery apparatus and a power consuming device.

### BACKGROUND

In related technologies, batteries are widely applied to electric vehicles such as electric bicycles, electric motorcycles, and electric automobiles. A battery apparatus may include a battery cell and a flexible printed circuit, where the flexible printed circuit may be disposed on a side of the battery cell. During use of the battery apparatus, the battery cell may expand, causing a change in the position of the flexible printed circuit which leads to rubbing or scratching with another structural member, resulting in a high risk of damage to the flexible printed circuit.

### SUMMARY

In view of the foregoing problem, the present application provides a battery apparatus and a power consuming device, which can reduce a risk of damage to a flexible printed circuit.

According to a first aspect, the present application provides a battery apparatus. The battery apparatus includes a battery cell, a flexible printed circuit, and a sleeve. The flexible printed circuit is electrically connected to the battery cell. The flexible printed circuit includes a body and a stretch and contraction portion connected to the body. The stretch and contraction portion is deformable by stretching and contracting in a length direction of the body. The stretch and contraction portion protrudes from the body in a thickness direction of the body. The sleeve is disposed outside the stretch and contraction portion in a sleeving manner.

In the battery apparatus of the foregoing implementation, the stretch and contraction portion can absorb stress in the length direction of the flexible printed circuit, and the sleeve is disposed outside the stretch and contraction portion in the sleeving manner. As such, the stretch and contraction portion can be in contact with a component such as a box body of the battery apparatus, thereby reducing a risk of damage to the flexible printed circuit.

In some implementations, the sleeve includes a first sleeve material and a second sleeve material detachably connected to the first sleeve material. The first sleeve material and the second sleeve material jointly form a sleeving space by enclosing. The stretch and contraction portion is accommodated in the sleeving space.

In the foregoing technical solution, the first sleeve material is detachably connected to the second sleeve material, facilitating the mounting of the sleeve, which can improve the efficiency of disposing the sleeve outside the stretch and contraction portion in the sleeving manner.

In some implementations, the first sleeve material is in a snap-fit connection with the second sleeve material.

In the foregoing technical solution, the first sleeve material is in the snap-fit connection with the second sleeve material. As such, the efficiency of assembling the first sleeve material and the second sleeve material can be improved.

In some implementations, the first sleeve material includes a first enclosing wall and a first engaging wall connected to the first enclosing wall. The second sleeve material includes a second enclosing wall and a second engaging wall connected to the second enclosing wall. The first engaging wall is in an engagement connection with the second engaging wall. The first enclosing wall, the first engaging wall, the second enclosing wall, and the second engaging wall jointly form the sleeving space by enclosing.

In the foregoing technical solution, the first engaging wall is in the engagement connection with the second engaging wall, so that the first sleeve material is stably connected to the second sleeve material. In addition, the first enclosing wall, the first engaging wall, the second enclosing wall, and the second engaging wall jointly form the sleeving space by enclosing, so that the sleeve can be disposed outside the stretch and contraction portion in the sleeving manner.

In some implementations, the first engaging wall includes a first connecting arm and a first engaging hook. The first connecting arm is connected to the first enclosing wall. The first engaging hook is formed at an end of the first connecting arm away from the first enclosing wall. The second engaging wall includes a second connecting arm and a second engaging hook. The second connecting arm is connected to the second enclosing wall. The second engaging hook is formed at an end of the second connecting arm away from the second enclosing wall. The first engaging hook engages with the second engaging hook.

In the foregoing technical solution, the first engaging engages with the second engaging hook, so that the first sleeve material and the second sleeve material can engage together.

In some implementations, the first enclosing wall includes a first enclosure portion and a first connecting portion connected to the first enclosure portion, where the first enclosure portion arches from the first connecting portion towards a direction away from the second enclosing wall; and/or

the second enclosing wall includes a second enclosure portion and a second connecting portion connected to the second enclosure portion, where the second enclosure portion arches from the second connecting portion towards a direction away from the first enclosing wall.

In the foregoing technical solution, the first enclosure portion arches from the first connecting portion towards the direction away from the second enclosing wall, and/or the second enclosure portion arches from the second connecting portion towards the direction away from the first enclosing wall. As such, the formation of the sleeving space is made easier, facilitating the surrounding of the stretch and contraction portion.

In some implementations, the stretch and contraction portion is corrugated in the length direction of the body.

In the foregoing technical solution, the corrugated stretch and contraction portion easily implements a stretch and contraction function.

In some embodiments, the sleeve is spaced apart from the battery cell.

In the foregoing technical solution, the sleeve is spaced apart from the battery cell. As such, the battery cell may slightly squeeze the sleeve when deforming by expansion, thereby reducing deformation of the sleeve and improving protective performance for the stretch and contraction portion.

In some implementations, the battery apparatus includes an electric member. The flexible printed circuit includes an end portion connected to the stretch and contraction portion. The end portion is located on a side of the stretch and contraction portion facing away from the body. A connector is provided at the end portion. The connector is plugged into the electric member.

In the foregoing technical solution, the connector can electrically connect the flexible printed circuit to another electric member.

According to a second aspect, the present application provides a power consuming device, including the battery apparatus of the foregoing implementations.

Additional aspects and advantages of the present application will be given in the following description, some of which will become apparent from the following description or may be learned from practices of the present application.

### BRIEF DESCRIPTION OF THE DRAWINGS

The foregoing and/or additional aspects and advantages of the present application will become apparent and easily comprehensible in the description of the embodiments made with reference to the following accompanying drawings.
FIG. 1 is a schematic diagram of a structure of a vehicle according to some embodiments of the present application;
FIG. 2 is a schematic perspective view of a battery apparatus according to some embodiments of the present application;
FIG. 3 is a schematic diagram of an internal structure of a battery apparatus according to some embodiments of the present application;
FIG. 4 is a first schematic perspective view of part of a battery apparatus according to some embodiments of the present application;
FIG. 5 is a second schematic perspective view of a part of a battery apparatus according to some embodiments of the present application;
FIG. 6 is a schematic planar view of a part of a battery apparatus according to some embodiments of the present application;
FIG. 7 is a schematic sectional view of a sleeve according to some embodiments of the present application; and
FIG. 8 is a schematic exploded view of a sleeve according to some embodiments of the present application.

### Descriptions of reference numerals:

100 - battery apparatus; 10 - battery cell; 20 - box body; 30 - flexible printed circuit; 31 - body; 32 - stretch and contraction portion; 33 - end portion; 40 - sleeve; 41 - first sleeve material; 411 - first enclosing wall; 412 - first engaging wall; 413 - first connecting arm; 414 - first engaging hook; 415 - first enclosure portion; 416 - first connecting portion; 42 - second sleeve material; 421 - second enclosing wall; 422 - second engaging wall; 423 - second connecting arm; 424 - second engaging hook; 425 - second enclosure portion; 426 - second connecting portion; 43 - sleeving space; 50 - connector; 60 - electric member; 1000 - vehicle; 200 - controller; and 300 - motor.

### DETAILED DESCRIPTION

To make the objectives, technical solutions, and advantages of embodiments of the present application clearer, the following clearly describes the technical solutions in the embodiments of the present application with reference to the accompanying drawings in the embodiments of the present application. Apparently, the described embodiments are merely some rather than all of the embodiments of the present application. All other embodiments obtained by a person of ordinary skill in the art based on the embodiments of the present application without making creative efforts shall fall within the protection scope of the present application.

Unless otherwise defined, all technical and scientific terms used in the present application have same meanings as commonly understood by a person skilled in the technical field of the present application. The terms used in the specification of the present application are merely for describing specific embodiments, and are not intended to limit the present application. The terms "include", "have", and any variations thereof in the specification and claims of the present application and in the foregoing descriptions of the accompanying drawings are intended to cover non-exclusive inclusions. In the specification and claims or accompanying drawings of the present application, the terms "first", "second", and the like are intended to distinguish different objects, rather than indicating a specific order or primary and secondary relationship.

The reference to "embodiment" in the present application means that specific features, structures, or characteristics described with reference to the embodiment may be included in at least one embodiment of the present application. The term appearing at different positions of the specification may not necessarily refer to the same embodiment or an independent or alternative embodiment that is mutually exclusive with another embodiment.

In the descriptions of the present application, it should be noted that unless otherwise explicitly specified or defined, the terms "mount", "connect", "connection", and "attach" should be understood in a broad sense. For example, a connection may be a fixed connection, a detachable connection, or an integral connection; may be a direct connection or an indirect connection through an intermediary; or may be internal communication between two elements. A person of ordinary skill in the art may understand the specific meanings of the foregoing terms in the present application according to specific situations.

The term "and/or" in the present application is merely an associative relationship for describing associated objects, indicating that three relationships may be present. For example, A and/or B may indicate three cases: presence of only A; presence of both A and B; and presence of only B. In addition, the character "/" in the present application generally means that the associated objects before and after it are in an "or" relationship.

In the examples of the present application, the same reference numerals represent the same component, and detailed descriptions of the same component is omitted in different embodiments for sake of brevity. It should be understood that the thickness, length, width, and other dimensions of various components in the embodiments of the present application that are shown in the accompanying drawings, as well as the overall thickness, length, width, and other dimensions of an integrated apparatus are for illustrative purposes only, and should not constitute any limitation to the present application.

The term "a plurality of" appearing in the present application means two and more (including two).

In the embodiments of the present application, unless otherwise specified, all the implementations and optional implementations of the present application can be combined with each other to form new technical solutions.

In the embodiments of the present application, unless otherwise specified, all technical features and optional technical features of the present disclosure can be combined with each other to form new technical solutions.

In related technologies, batteries are widely applied to electric vehicles such as electric bicycles, electric motorcycles, and electric automobiles. A battery apparatus may include a battery cell and a flexible printed circuit, where the flexible printed circuit may be disposed on a side of the battery cell. The flexible printed circuit can transmit a signal. For example, the flexible printed circuit can transmit a sampling signal, such as a current of the battery cell.

Generally, the flexible printed circuit has an elongated shape, and two ends of the flexible printed circuit in a length direction thereof are fixed. In this case, the battery cell likely pulls the flexible printed circuit when deforming, causing damage such as breakage to the flexible printed circuit. In view of this, the flexible printed circuit may be formed into a stretch and contraction structure. When the flexible printed circuit is pulled, the stretch and contraction structure can absorb a pulling force applied to the flexible printed circuit, thereby reducing a risk of pulling damage to the flexible printed circuit.

However, a stretch and contraction portion generally protrudes from a surface of a body of the flexible printed circuit. During expansion deformation of the battery cell, the stretch and contraction portion moves in a thickness direction of the flexible printed circuit, and is likely to rub or scratch another structural member such as a box body of the battery apparatus, making the stretch and contraction portion prone to damage.

In view of this, the present application provides a battery apparatus. The battery apparatus includes a battery cell, a flexible printed circuit, and a sleeve. The flexible printed circuit is electrically connected to the battery cell. The flexible printed circuit includes a body and a stretch and contraction portion connected to the body. The stretch and contraction portion is deformable by stretching and contracting in a length direction of the body. The stretch and contraction portion protrudes from the body in a thickness direction of the body. The sleeve is disposed outside the stretch and contraction portion in a sleeving manner.

In the battery apparatus of the foregoing implementation, the stretch and contraction portion can absorb stress in the length direction of the flexible printed circuit, and the sleeve is disposed outside the stretch and contraction portion in the sleeving manner. As such, the stretch and contraction portion can be in contact with a component such as a box body of the battery apparatus, thereby reducing a risk of damage to the flexible printed circuit.

The embodiments of the present application further provide a power consuming device using the battery apparatus as a power supply. The power consuming device may be, but is not limited to, a mobile phone, a tablet computer, a notebook computer, an electric toy, an electric tool, an electric bicycle, an electric automobile, a ship, and the like. The electric toy may include a stationary or mobile electric toy, such as a game console, an electric car toy, an electric ship toy, and an electric airplane toy.

In some implementations, the battery apparatus may be used in an energy storage device.

For ease of description, the following embodiments are described with an example in which a power consuming device according to an embodiment of the present application is a vehicle 1000.

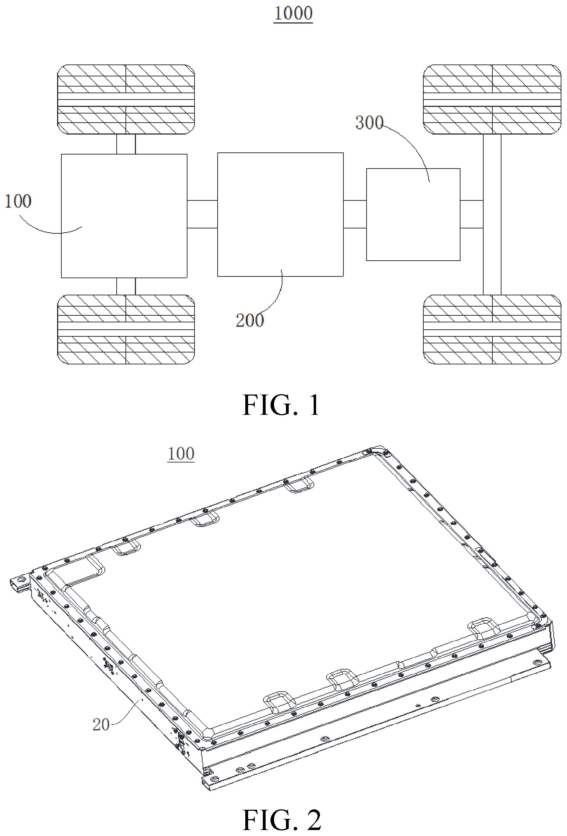

Referring to FIG. 1, the vehicle 1000 may be a new energy vehicle. The new energy vehicle may be a pure electric vehicle, a hybrid electric vehicle, an extended-range vehicle, or the like. Further, the vehicle 1000 may be a commercial vehicle. A battery apparatus 100 is disposed inside the vehicle 1000. The battery apparatus 100 may be disposed at the bottom, head, or tail of the vehicle 1000. The battery apparatus 100 may be configured to supply power to the vehicle 1000. For example, the battery apparatus 100 may serve as an operational power supply of the vehicle 1000. The vehicle 1000 may further include a controller 200 and a motor 300. The controller 200 is configured to control the battery apparatus 100 to supply power to the motor 300, for example, to meet demands for working power during starting, navigation, and traveling of the vehicle 1000.

In some embodiments of the present application, the battery apparatus 100 can serve not only as an operating power supply of the vehicle 1000, but also as a driving power supply of the vehicle 1000, in place of or partially in place of fuel or natural gas for providing driving power for the vehicle 1000.

Referring to FIG. 2 to FIG. 3, in the embodiments of the present application, the battery apparatus 100 may include one or more battery cell assemblies configured to provide a voltage and a capacity. The battery cell assembly may include a plurality of battery cells 10. The plurality of battery cells 10 are connected in series, in parallel, or in series-parallel by using a bus-bar component. For example, the battery cell assembly is typically formed by arranging a plurality of battery cells 10. The battery cell assembly may be a battery module. The battery module is an independent module formed by arranging and fixing a plurality of battery cells 10. For example, the battery module may be formed by binding a plurality of battery cells 10 with a tie.

In the embodiments of the present application, the battery apparatus 100 includes a box body 20. The box body 20 may include a first box body and a second box body. The first box body is snap fitted to the second box body, forming a closed space inside the box body 20 to accommodate the battery cell assembly. Closing herein refers to covering or blocking, which may be sealed or non-sealed. The first box body may be a top cover or a bottom plate. For example, the box body 20 may include a top cover, a frame, and a bottom plate. The top cover and the bottom plate are each connected to the frame, forming the closed space inside the box body 20 to accommodate the battery cell assembly.

In the embodiments of the present application, the box body 20 may serve as a part of a chassis structure of the vehicle 1000. For example, a part of the box body 20 may serve as at least part of a floor of the vehicle 1000, or a part of the box body 20 may serve as at least part of a cross beam and a longitudinal beam of the vehicle.

In the embodiments of the present application, the battery cell 10 may be a secondary battery. The secondary battery refers to a battery cell 10 of which active materials thereof can be activated for reuse by means of charging after the battery cell 10 is discharged. The battery cell 10 may be a lithium ion battery, a sodium ion battery, a sodium-lithium ion battery, a lithium metal battery, a sodium metal battery, a lithium-sulfur battery, a magnesium ion battery, a nickel-metal hydride battery, a nickel-cadmium battery, a lead accumulator, or the like. This is not limited in the embodiments of the present application. The battery cell 10 may be in a flat shape, a cuboid shape, or other shapes, which is also not limited in the embodiments of the present application.

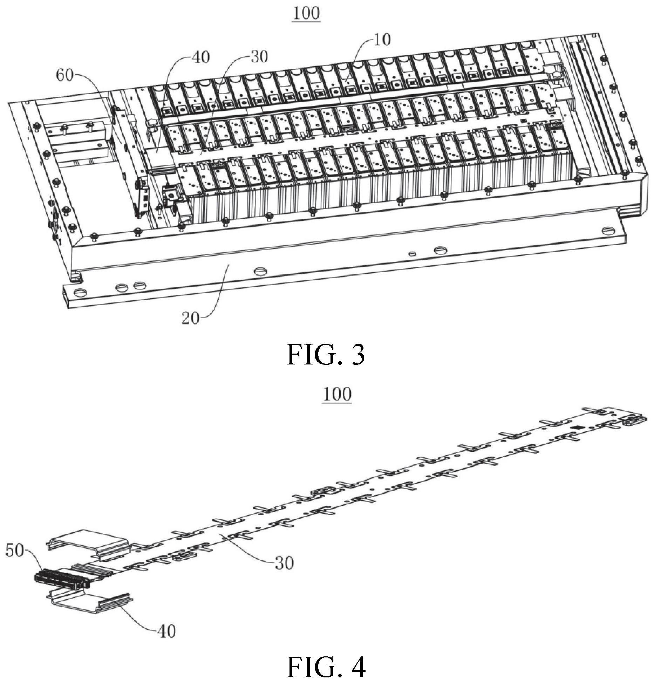

Referring to FIG. 3 to FIG. 6, in the battery apparatus 100 of an implementation of the present application, the battery apparatus 100 includes a battery cell 10, a flexible printed circuit 30, and a sleeve 40. The flexible printed circuit 30 is electrically connected to the battery cell 10. The flexible printed circuit 30 includes a body 31 and a stretch and contraction portion 32 connected to the body 31. The stretch and contraction portion 32 is deformable by stretching and contracting in a length direction of the body 31. The stretch and contraction portion 32 protrudes from the body 31 in a thickness direction of the body 31. The sleeve 40 is disposed outside the stretch and contraction portion 32 in a sleeving manner.

Specifically, the battery cell 10 may include a shell and an electrode assembly. The shell can protect an internal structure of the battery cell 10, thereby improving the life of the battery cell 10. The electrode assembly of the battery cell 10 may be a wound electrode assembly or may be a laminated electrode assembly. The electrode assembly may include an electrode plate and a tab. The electrode assembly may be formed by winding the electrode plate, or the electrode assembly may be formed by laminating the electrode plate.

The flexible printed circuit (FPC) 30 is an element that can electrically connect two elements. The body 31 of the flexible printed circuit 30 is a part of the flexible printed circuit 30 with a relatively large volume. The body 31 has an elongated flat shape. The stretch and contraction portion 32 and the body 31 are of an integral structure. The stretch and contraction portion 32 may be corrugated. In other words, the stretch and contraction portion 32 may be formed by folding a part of the flexible printed circuit 30, so that the stretch and contraction portion 32 is deformable by stretching and contracting in the length direction of the body 31. Since the stretch and contraction portion 32 is formed by means of folding, a dimension of the stretch and contraction portion 32 in thickness direction of the body 31 is greater than a thickness of the body 31.

The sleeve 40 has a hollow structure, so that the flexible printed circuit 30 can pass through the sleeve 40, and so that the stretch and contraction portion 32 is accommodated in the sleeve 40. It should be noted that when the sleeve 40 is disposed outside the stretch and contraction portion 32 in the sleeving manner, the stretch and contraction portion 32 is still deformable by stretching and contracting in the length direction of the body 31.

Therefore, in the battery apparatus 100 of the foregoing implementation, the stretch and contraction portion 32 can absorb stress in the length direction of the flexible printed circuit 30, and the sleeve 40 is disposed outside the stretch and contraction portion 32 in the sleeving manner. As such, the stretch and contraction portion 32 can be in contact with a component such as the box body 20 of the battery apparatus 100, thereby reducing a risk of damage to the flexible printed circuit 30.

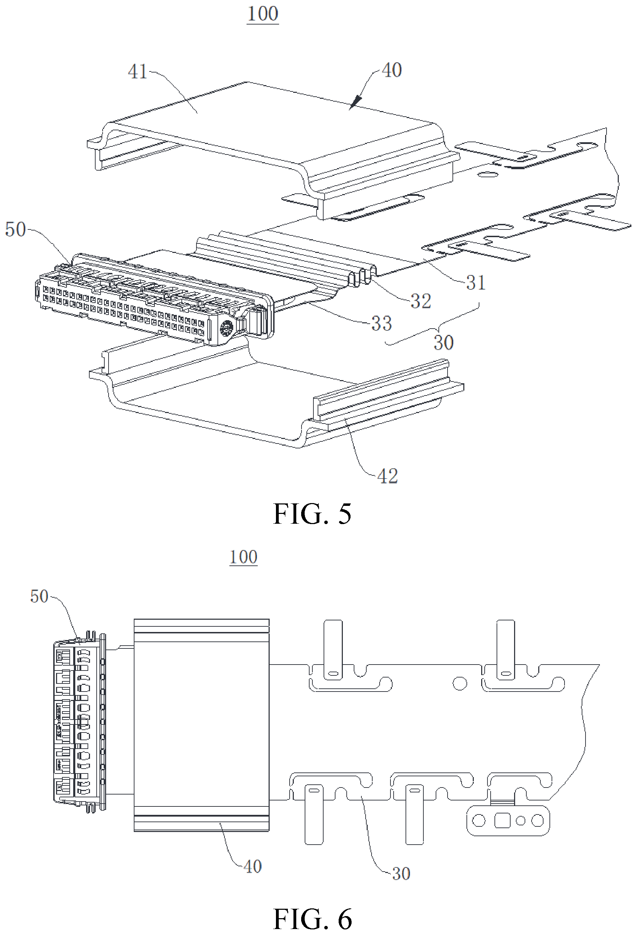

Referring to FIG. 5 to FIG. 8, in some implementations, the sleeve 40 includes a first sleeve material 41 and a second sleeve material 42 detachably connected to the first sleeve material 41. The first sleeve material 41 and the second sleeve material 42 jointly form a sleeving space 43 by enclosing. The stretch and contraction portion 32 is accommodated in the sleeving space 43.

Specifically, the first sleeve material 41 and the second sleeve material 42 are two parts of the sleeve 40 that are detachable, respectively. The first sleeve material 41 and the second sleeve material 42 can respectively protect two sides of the stretch and contraction portion 32 in the thickness direction of the body 31. The first sleeve material 41 and the second sleeve material 42 may be made of a wear-resistant material. For example, at least one of the first sleeve material 41 and the second sleeve material 42 may be made of a material such as Teflon or rubber.

In the foregoing technical solution, the first sleeve material 41 is detachably connected to the second sleeve material 42, facilitating the mounting of the sleeve 40, which can improve the efficiency of disposing the sleeve 40 outside the stretch and contraction portion 32 in the sleeving manner.

In some implementations, the first sleeve material 41 is in a snap-fit connection with the second sleeve material 42. For example, the first sleeve material 41 and the second sleeve material 42 have a snap-fit structure. The first sleeve material 41 and the second sleeve material 42 can be in an engagement connection through the snap-fit structure.

In the foregoing technical solution, the first sleeve material 41 is in the snap-fit connection with the second sleeve material 42. As such, the efficiency of assembling the first sleeve material 41 and the second sleeve material 42 can be improved.

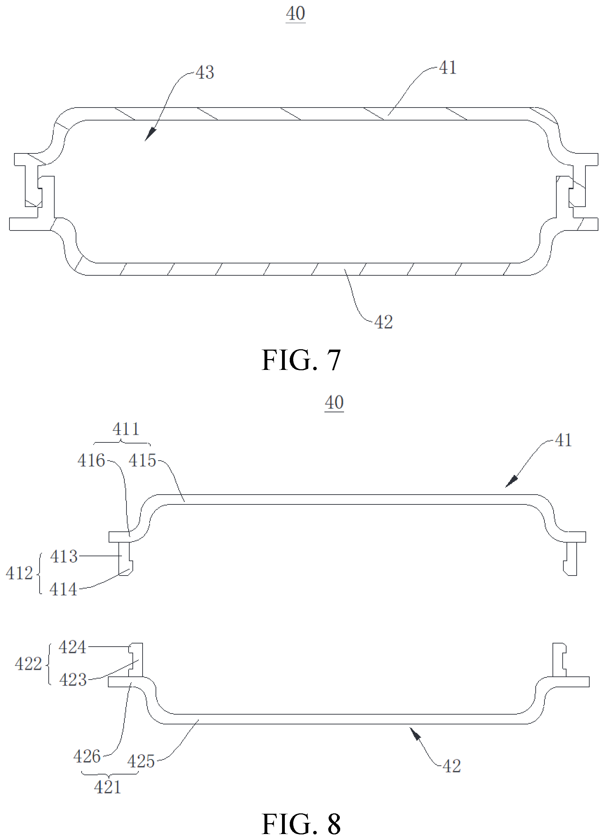

Referring to FIG. 7 to FIG. 8, in some implementations, the first sleeve material 41 includes a first enclosing wall 411 and a first engaging wall 412 connected to the first enclosing wall 411. The second sleeve material 42 includes a second enclosing wall 421 and a second engaging wall 422 connected to the second enclosing wall 421. The first engaging wall 412 is in an engagement connection with the second engaging wall 422. The first enclosing wall 411, the first engaging wall 412, the second enclosing wall 421, and the second engaging wall 422 jointly form the sleeving space 43 by enclosing.

Specifically, the first enclosing wall 411 and the second enclosing wall 421 each have a sheet-like structure. The first engaging wall 412 and the second engaging wall 422 each also have a sheet-like structure as a whole. The first enclosing wall 411 and the second wall are respectively located on the two sides of the stretch and contraction portion 32 in the thickness direction of the body 31. The first engaging wall 412 and the first enclosing wall 411 may be of an integral structure. The number of the first engaging walls 412 is two. The two first engaging walls 412 are respectively located on two opposite sides of the first enclosing wall 411.

The second engaging wall 422 and the second enclosing wall 421 may be of an integral structure. The number of the second engaging walls 422 is two. The two second engaging walls 422 are respectively located on two opposite sides of the second enclosing wall 421.

In the foregoing technical solution, the first engaging wall 412 is in the engagement connection with the second engaging wall 422, so that the first sleeve material 41 is stably connected to the second sleeve material 42. In addition, the first enclosing wall 411, the first engaging wall 412, the second enclosing wall 421, and the second engaging wall 422 jointly form the sleeving space 43 by enclosing, so that the sleeve 40 can be disposed outside the stretch and contraction portion 32 in the sleeving manner.

Referring to FIG. 7 to FIG. 8, in some implementations, the first engaging wall 412 includes a first connecting arm 413 and a first engaging hook 414. The first connecting arm 413 is connected to the first enclosing wall 411. The first engaging hook 414 is formed at an end of the first connecting arm 413 away from the first enclosing wall 411. The second engaging wall 422 includes a second connecting arm 423 and a second engaging hook 424. The second connecting arm 423 is connected to the second enclosing wall 421. The second engaging hook 424 is formed at an end of the second connecting arm 423 away from the second enclosing wall 421. The first engaging hook 414 engages with the second engaging hook 424.

Specifically, the first connecting arm 413 and the second connecting arm 423 each may have a sheet-like structure. The first connecting arm 413 and the second connecting arm 423 each are a cantilever beam structure. In other words, one end of each of the first connecting arm 413 and the second connecting arm 423 is a fixed end, and the other end thereof is a free end. To enable higher efficiency of engaging the first engaging wall 412 and the second engaging wall 422, the first connecting arm 413 and the second connecting arm 423 may be elastic. In other words, the first connecting arm 413 and the second connecting arm 423 are elastically deformable, so that the first engaging wall 412 and the second engaging wall 422 more easily engage together.

The first engaging hook 414 is in the shape of a protrusion block, and the first engaging hook 414 and the first connecting arm 413 are of an integral structure. Similarly, the second engaging hook 424 is also in the shape of a protrusion block, and the second engaging hook 424 and the second connecting arm 423 are of an integral structure.

In the foregoing technical solution, the first engaging engages with the second engaging hook 424, so that the first sleeve material 41 and the second sleeve material 42 can engage together.

Referring to FIG. 7 to FIG. 8, in some implementations, the first enclosing wall 411 includes a first enclosure portion 415 and a first connecting portion 416 connected to the first enclosure portion 415, where the first enclosure portion 415 arches from the first connecting portion 416 towards a direction away from the second enclosing wall 421.

Specifically, the first connecting portion 416 forms a side edge of the first enclosing wall 411. The first connecting portion 416 and the first enclosure portion 415 are of an integral structure. Therefore, the first enclosure portion 415 arches from the first connecting portion 416 towards the direction away from the second enclosing wall 421. As such, the formation of the sleeving space 43 is made easier, facilitating surrounding of the stretch and contraction portion 32 by the first sleeve material 41 and the second sleeve material 42.

Referring to FIG. 7 to FIG. 8, in some implementations, the second enclosing wall 421 includes a second enclosure portion 425 and a second connecting portion 426 connected to the second enclosure portion 425, where the second enclosure portion 425 arches from the second connecting portion 426 towards a direction away from the first enclosing wall 411.

Specifically, the second connecting portion 426 forms a side edge of the second enclosing wall 421. The second connecting portion 426 and the second enclosure portion 425 are of an integral structure. Therefore, the second enclosure portion 425 arches from the second connecting portion 426 towards the direction away from the first enclosing wall 411. As such, the formation of the sleeving space 43 is made easier, facilitating the surrounding of the stretch and contraction portion 32 by the first sleeve material 41 and the second sleeve material 42.

Referring to FIG. 5, in some implementations, the stretch and contraction portion 32 is corrugated in the length direction of the body 31. Specifically, the stretch and contraction portion 32 has a plurality of fold portions disposed in a folded manner. The fold portions make the stretch and contraction portion 32 corrugated. When the stretch and contraction portion 32 is subjected to a pulling force, the stretch and contraction portion 32 stretches. After the pulling force is removed, the stretch and contraction portion 32 contracts. As such, in the foregoing technical solution, the corrugated stretch and contraction portion 32 easily implements a stretch and contraction function.

Referring to FIG. 3, in some implementations, the sleeve 40 is spaced apart from the battery cell 10. In other words, a spacing is present between the sleeve 40 and the battery cell 10. In the foregoing technical solution, the sleeve 40 is spaced apart from the battery cell 10. As such, the battery cell 10 may slightly squeeze the sleeve 40 when deforming by expansion, thereby reducing deformation of the sleeve 40 and improving protective performance for the stretch and contraction portion 32.

Referring to FIG. 3 and FIG. 5, in some implementations, the battery apparatus 100 includes an electric member 60. The flexible printed circuit 30 includes an end portion 33 connected to the stretch and contraction portion 32. The end portion 33 is located on a side of the stretch and contraction portion 32 facing away from the body 31. A connector 50 is provided at the end portion 33. The connector 50 is plugged into the electric member 60. Specifically, the connector 50 may be connected to the electric member 60 such as a printed circuit of the battery apparatus 100. The electric member 60 is, for example, a control main board, a battery monitoring unit, or the like. Therefore, the battery cell 10 is connected to a printed circuit through the flexible printed circuit 30 and the connector 50. In the foregoing technical solution, the connector 50 can electrically connect the flexible printed circuit 30 to the electric member 60.

In the descriptions of this specification, descriptions with reference to the term "an embodiment", "some embodiments", "an exemplary embodiment", "an example", "a specific example", or "some examples" mean that specific features, structures, materials, or characteristics described with reference to the embodiment or example are included in at least one embodiment or example of the present application. In this specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present application have been shown and described, a person of ordinary skill in the art should understand that various changes, modifications, replacements, and variations may be made to the embodiments without departing from the principles and spirit of the present application, and the scope of the present application is as defined by the claims and their equivalents.

## Claims

1. A battery apparatus, comprising:
a battery cell;
a flexible printed circuit electrically connected to the battery cell, the flexible printed circuit comprising a body and a stretch and contraction portion connected to the body, wherein the stretch and contraction portion is deformable by stretching and contracting in a length direction of the body, and the stretch and contraction portion protrudes from the body in a thickness direction of the body; and
a sleeve disposed outside the stretch and contraction portion in a sleeving manner.

2. The battery apparatus according to claim 1, wherein the sleeve comprises a first sleeve material and a second sleeve material detachably connected to the first sleeve material, wherein the first sleeve material and the second sleeve material jointly form a sleeving space by enclosing, and the stretch and contraction portion is accommodated in the sleeving space.

3. The battery apparatus according to claim 2, wherein the first sleeve material is in a snap-fit connection with the second sleeve material.

4. The battery apparatus according to claim 3, wherein the first sleeve material comprises a first enclosing wall and a first engaging wall connected to the first enclosing wall, and the second sleeve material comprises a second enclosing wall and a second engaging wall connected to the second enclosing wall, wherein the first engaging wall is in an engagement connection with the second engaging wall, and the first enclosing wall, the first engaging wall, the second enclosing wall, and the second engaging wall jointly form the sleeving space by enclosing.

5. The battery apparatus according to claim 4, wherein:
the first engaging wall comprises a first connecting arm and a first engaging hook, the first connecting arm being connected to the first enclosing wall, and the first engaging hook being formed at an end of the first connecting arm away from the first enclosing wall; and
the second engaging wall comprises a second connecting arm and a second engaging hook, the second connecting arm being connected to the second enclosing wall, and the second engaging hook being formed at an end of the second connecting arm away from the second enclosing wall,
wherein the first engaging hook engages with the second engaging hook.

6. The battery apparatus according to claim 4 or 5, wherein:
the first enclosing wall comprises a first enclosure portion and a first connecting portion connected to the first enclosure portion, the first enclosure portion arching from the first connecting portion towards a direction away from the second enclosing wall; and/or
the second enclosing wall comprises a second enclosure portion and a second connecting portion connected to the second enclosure portion, the second enclosure portion arching from the second connecting portion towards a direction away from the first enclosing wall.

7. The battery apparatus according to any one of claims 1 to 6, wherein the stretch and contraction portion is corrugated in the length direction of the body.

8. The battery apparatus according to any one of claims 1 to 7, wherein the sleeve abuts against the battery cell.

9. The battery apparatus according to any one of claims 1 to 8, wherein:
the battery apparatus comprises an electric member; and
the flexible printed circuit comprises an end portion connected to the stretch and contraction portion, wherein the end portion is located on a side of the stretch and contraction portion facing away from the body, and a connector is provided at the end portion,
wherein the connector is plugged into the electric member.

10. A power consuming device, comprising the battery apparatus according to any one of claims 1 to 9.
